# EUROPEAN PATENT APPLICATION

(11) **EP 4 844 620 A1**
(43) Date of publication of application: **25.11.2026**
(21) Application number: 26175471.7
(22) Date of filing: 29.04.2026
(51) Int. Cl.: G06F 30/13, G06F 16/907, G06F 21/62, G06F 111/18

(54) **DESIGN SUPPORT DEVICE AND DESIGN SUPPORT SYSTEM**

(30) Priority: 20.05.2025 JP 2025084056
(71) Applicant: Hitachi, Ltd., Tokyo 100-8280 (JP); Hitachi GE Vernova Nuclear Energy, Ltd., Hitachi-shi, Ibaraki 317-0073 (JP)
(72) Inventor: HOSOKAWA, Yuji, Ibaraki, 317-0073 (JP); OSAKA, Masaaki, Tokyo, 100-8280 (JP); ISHIDA, Kazuya, Ibaraki, 317-0073 (JP); ISHIWATARI, Yuki, Tokyo, 100-8280 (JP); KONISHI, Wataru, Tokyo, 100-8280 (JP)
(74) Representative: MERH-IP Matias Erny Reichl Hoffmann Patentanwälte PartG mbB

(57) **Abstract**

A design support device (2) includes a virtual space creation unit (211) configured to create image data of a virtual space simulating a site to be designed, an information search unit (214) configured to be able to search for information related to equipment to be designed, which is disposed in the virtual space, on the basis of attribute information of a user, and a communication unit (23) communicably connected to an external device (3) used by the user, configured to receive an instruction to search for information related to equipment by the user, and configured to transmit a result of information search by the information search unit (214) performed on the basis of the instruction to the external device (3).

## Description

### BACKGROUND

### Technical Field

The present invention relates to a design support device and a design support system.

### Related Art

Conventionally, various techniques related to design work of a power plant have been proposed (see, for example, Patent Literature 1). Patent Literature 1 discloses a device of creating three-dimensional arrangement adjustment CAD (Computer Aided Design) data for easily and quickly creating three-dimensional arrangement adjustment CAD data of an arrangement route for a cable housing component at the time of initial planning of plant design.

### Citation List

### Patent Literature

Patent Literature 1: JP 2010-211652 A

### SUMMARY

Meanwhile, in design work of a plant (power plant or the like), there is a demand for a design support technique that enables a person involved in the design work (designer or the like) to easily search for information related to the plant design and to collect information appropriate for the person involved.

The present invention has been made in view of the above circumstances, and an object of the present invention is to provide a design support technique that enables a person involved in plant design work to easily search for information related to plant design, and to collect information appropriate for the person involved.

In order to solve the above problems, a design support device of the present invention includes a virtual space creation unit, an information search unit, and a communication unit. The virtual space creation unit creates image data of a virtual space simulating a site to be designed. The information search unit can search for information related to equipment to be designed, which is disposed in the virtual space, on the basis of attribute information of a user. Furthermore, the communication unit is communicably connected to an external device used by the user, receives an instruction to search for information related to equipment by the user, and transmits a result of an information search by the information search unit performed on the basis of the instruction to the external device.

In addition, in order to solve the above problems, a design support system of the present invention includes an information processing device used by a user, a virtual space creation unit, an information search unit, and a communication unit. The virtual space creation unit creates image data of a virtual space simulating a site to be designed. The information search unit can search for information related to equipment to be designed, which is disposed in the virtual space, on the basis of attribute information of a user. Furthermore, the communication unit is communicably connected to the information processing device, receives an operation signal corresponding to an operation of searching for information related to the equipment performed on the information processing device by the user, and transmits a result of an information search performed by the information search unit on the basis of the operation signal to the information processing device.

According to the present invention with the above configuration, the person involved in the plant design work can easily search for information related to the plant design, and can collect information appropriate for the person involved.

### BRIEF DESCRIPTION OF DRAWINGS

FIG. 1 is a configuration diagram of a design support system according to an embodiment of the present invention;
FIG. 2 is a hardware configuration diagram of a computer device applicable as a design support device and a user terminal included in the design support system according to an embodiment of the present invention;
FIG. 3 is a functional block configuration diagram of the design support device according to an embodiment of the present invention;
FIG. 4 is a functional block configuration diagram of the user terminal included in the design support system according to an embodiment of the present invention;
FIG. 5 is a diagram for explaining an operation outline of an object-related information search function included in an information search unit of the design support device according to an embodiment of the present invention;
FIG. 6 is a diagram illustrating an operation example of an information search operation of object-related information performed by the design support device according to an embodiment of the present invention;
FIG. 7 is a diagram for explaining an operation outline of a surrounding area-related information search function included in the information search unit of the design support device according to an embodiment of the present invention; and
FIG. 8 is a diagram illustrating an operation example of an information search operation of the surrounding area-related information performed by the design support device according to an embodiment of the present invention.

### DETAILED DESCRIPTION

Hereinafter, a design support system and a design support device included in the design support system according to an embodiment of the present invention will be specifically described with reference to the drawings. Note that, hereinafter, as an example, a design support system and a design support device that can be used in power plant design work will be described.

### <Configuration of Design Support System>

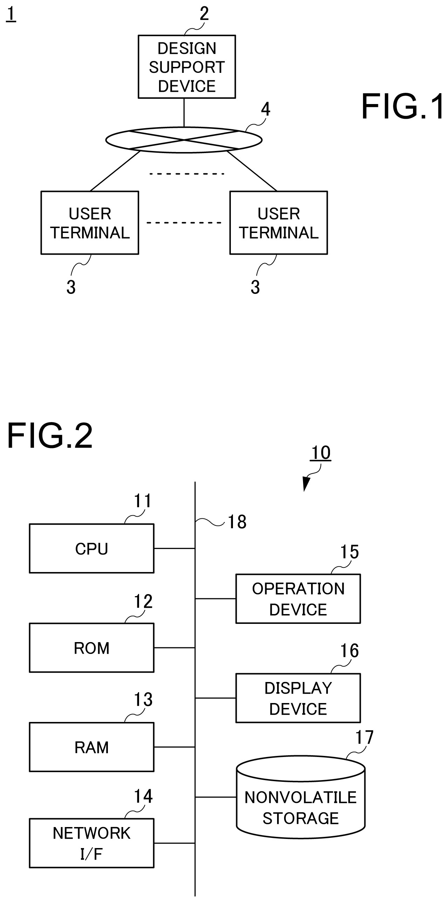

FIG. 1 is a configuration diagram of a design support system 1 according to an embodiment of the present invention. As illustrated in FIG. 1, the design support system 1 includes a design support device 2 and a plurality of user terminals 3 (external devices). The design support device 2 is communicably connected to each of the plurality of user terminals 3 via a communication network 4.

The design support device 2 includes an information processing device such as a computer device 10 to be described later (see FIG. 2 to be described later). The design support device 2 has a function of creating a three-dimensional virtual space that simulates the inside and appearance of a facility (site) such as a building of a power plant to be designed. The design support device 2 then provides, for example, various functions that enable all designers of upstream design and downstream design engaged in plant design work to access the virtual space and execute a design operation in the virtual space as users of the design support device 2. That is, the design support device 2 can support a concurrent design operation by all designers engaged in the plant design work in the virtual space simulating the inside and appearance of the facility such as the building of the power plant.

In addition, the design support device 2 is a device that not only the designer, but also a person involved in the power plant design can access from the user terminal 3 of the person. The person involved can search for the attribute information and the related information of various objects in the virtual space. Note that various functions of the design support device 2 will be described in detail later.

Each user terminal 3 is an information processing device used by a person involved in plant design work, and includes an information processing device such as the computer device 10 to be described later (see FIG. 2 to be described later). Specifically, each user terminal 3 can include, for example, an information processing device having a calculation function and a communication function, such as a personal computer, a smartphone, or a tablet. In addition, examples of the person involved in plant design work include persons (designers) in charge of design work such as system design, device design, construction design, and local construction plan, and users such as employees of a design department. Note that, in the present embodiment, an example in which the plurality of user terminals 3 have the same configuration will be described. However, some of the plurality of user terminals 3 may have different configurations, or the plurality of user terminals 3 may have different configurations.

The user terminal 3 receives image data of the virtual space created by the design support device 2, and displays the image data of the virtual space on a display unit 34 to be described later. In addition, the user terminal 3 acquires operation information related to an access operation of the user to the virtual space created by the design support device 2 and operations of the user in the virtual space, and the like, and transmits the operation information to the design support device 2 via the communication network 4.

Note that the design support device 2 having received the operation information from the user terminal 3 performs image control processing such that the operation of the user corresponding to the operation information is reflected in the virtual space, and transmits the virtual space, an object to be described later, and image data of an avatar to be described later, which have been subjected to the image control processing, to the plurality of user terminals 3. As a result, an image reflecting the operation of the user is displayed in the virtual space displayed on the display unit 34 to be described later of the user terminal 3. Various functions of the user terminal 3 will be described in detail later.

The communication network 4 can include, for example, a local area network (LAN) or a wide area network (WAN) such as the Internet, and can perform wired or wireless communication. Note that, in a case where the design support device 2 and the plurality of user terminals 3 are arranged at a short distance (for example, in a case where they are arranged in the same room), for example, a short-range wireless communication system such as Bluetooth (registered trademark) or WiFi (registered trademark) may be used as a communication system in the communication network 4.

### <Hardware Configuration of Design Support Device and User Terminal>

FIG. 2 is a block diagram illustrating an example of a hardware configuration of the computer device 10 applicable as the design support device 2 and the user terminal 3.

As illustrated in FIG. 2, the computer device 10 includes a central processing unit (CPU) 11, a read only memory (ROM) 12, and a random access memory (RAM) 13 connected to a bus line 18. In addition, the computer device 10 includes a network interface (I/F) 14, an operation device 15, a display device 16, and a nonvolatile storage 17 connected to the bus line 18. Note that, although not illustrated in FIG. 2, the computer device 10 also includes various interfaces used when input and output processing of various types of data (various types of information) is executed with an external device.

The CPU 11 reads a program code of software for implementing various processing functions included in each of the design support device 2 and the user terminal 3 from the ROM 12 to the RAM 13 and executes the program code. At this time, various types of data such as variables and parameters generated during calculation processing are temporarily written in the RAM 13.

The network I/F 14 includes, for example, a network interface card (NIC) or the like, and transmits and receives various types of data to and from each device connected via wireless communication.

The operation device 15 includes, for example, keys, buttons, and the like, generates an operation signal corresponding to an operation content input by an operator (user or the like), and supplies the operation signal to the CPU 11. The display device 16 includes, for example, a liquid crystal panel or the like, and displays characters, images, and the like on a screen. In addition, the display device 16 may include a touch panel, and in this case, the display device 16 and the operation device 15 are integrally configured.

Note that in the design support system 1 of the present embodiment, the user operates the operation device 15 such as a key, a button, a mouse, or a touch panel provided in the user terminal 3 to execute various operations in the virtual space displayed on the display screen of the display device 16.

In addition, in the design support system 1 of the present embodiment, the user can perform various operations in the virtual space using a head mounted display (HMD) and a controller used by being held in the hand or worn. In this case, in the user terminal 3, the HMD in which the virtual space is displayed serves as the display device 16, and the controller for performing various operations in the virtual space displayed on the HMD serves as the operation device 15. Furthermore, in this case, in the user terminal 3, the HMD (display device 16), the controller (operation device 15), and the CPU 11 may be communicably connected using, for example, the short-range wireless communication system such as Bluetooth or WiFi.

The nonvolatile storage 17 can include, for example, a hard disk drive (HDD), a solid state drive (SSD), a flexible disk, an optical disk, a magneto-optical disk, a compact disc (CD)-ROM, a CD-R, a magnetic tape, a nonvolatile memory, or the like. The nonvolatile storage 17 stores various programs for causing the computer device 10 to function as each of the design support device 2 and the user terminal 3, in addition to an operating system (OS) and various parameters. Note that information (data) such as a program, a table, and a file for implementing each function provided in each of the design support device 2 and the user terminal 3 may be stored in a recording medium such as an IC (Integrated Circuit) card, an SD card, or a DVD (Digital Versatile Disc) in addition to the ROM 12 and the nonvolatile storage 17.

Note that, in a case where the design support device 2 is configured as a server device, the design support device 2 need not include the operation device 15 and/or the display device 16 described above.

### <Functional Configuration of Design Support Device>

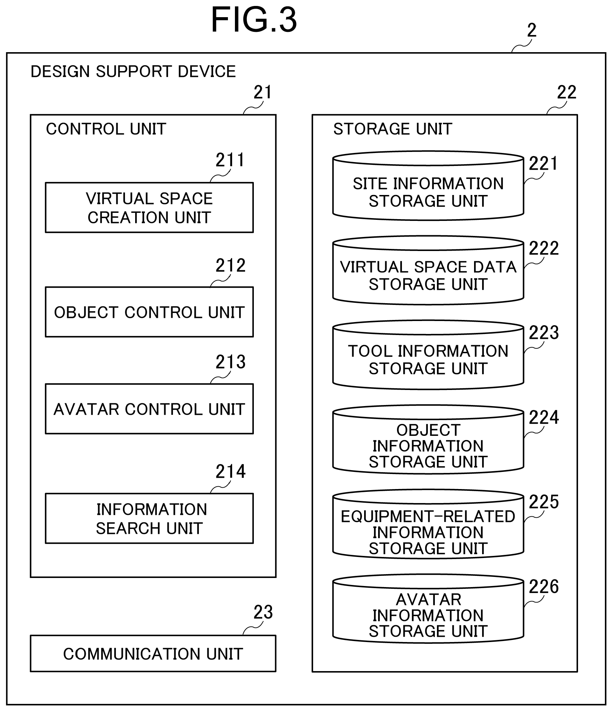

FIG. 3 is a functional block configuration diagram of the design support device 2 according to an embodiment of the present invention. As illustrated in FIG. 3, the design support device 2 includes a control unit 21, a storage unit 22, and a communication unit 23.

The control unit 21 is included in the CPU 11 in FIG. 2, reads a program code for implementing various functions, which will be described later, executable by the design support device 2 from the ROM 12 to the RAM 13 in FIG. 2, and executes the program code. The storage unit 22 is included in the nonvolatile storage 17 and/or the RAM 13 in FIG. 2, includes a data readable and writable memory, and stores various types of information used in processing for implementing operations of various functional units included in the control unit 21. In addition, the communication unit 23 is included in the network I/F 14 in FIG. 2, and transmits and receives various types of information (data) to and from a plurality of user terminals 3 connectable via the communication network 4.

### [Control Unit]

As illustrated in FIG. 3, the control unit 21 functionally includes a virtual space creation unit 211, an object control unit 212, an avatar control unit 213, and an information search unit 214. The operation outline of each component is as follows.

### (Virtual Space Creation Unit)

The virtual space creation unit 211 creates image data of a three-dimensional virtual space that simulates the inside and appearance of a facility (site) such as a building of a power plant to be designed. Specifically, the virtual space creation unit 211 creates the image data of the three-dimensional virtual space using point cloud data and/or three-dimensional CAD data of the actual site of the power plant to be designed stored in a site information storage unit 221 to be described later in the storage unit 22. Note that an existing technique can be used as a method of creating image data of a three-dimensional virtual space.

In addition, the virtual space creation unit 211 outputs the created image data of the virtual space of the power plant to the communication unit 23. As a result, the image data of the virtual space of the power plant is transmitted to each user terminal 3 via the communication network 4, and the image of the virtual space is displayed on the display unit 34 (for example, a liquid crystal panel or an HMD) to be described later of each user terminal 3.

### (Object Control Unit)

The object control unit 212 acquires, via the communication network 4, operation information corresponding to an object creation operation, various object editing operations, or the like performed on the virtual space by the user using the user terminal 3, and performs image processing of the object based on the operation information. The object control unit 212 then outputs the image data of the object subjected to the image processing corresponding to the operation information to the communication unit 23. As a result, the image data of the object after the image processing is transmitted to each user terminal 3 via the communication network 4, and is displayed on the display unit 34 (for example, a liquid crystal panel or an HMD) to be described later of each user terminal 3. That is, an image reflecting the operation performed on the object by the user in the virtual space is displayed on the display unit 34 to be described later of each user terminal 3.

Note that the "object" referred to herein is equipment installed in a space or on outer wall portion in a facility such as a building of a power plant, for example, a pipe, a conduit, a connection box, a valve, a panel, a rack, a device, or the like. In addition, the image data of the object created by the object control unit 212 is, for example, image data that simulates equipment such as a pipe, a conduit, a connection box, a valve, a panel, a rack, or a device. Such image data of the object of the design target for each type of equipment is stored in advance in a tool information storage unit 223 to be described later in the storage unit 22.

The object control unit 212 has the following various support functions related to an object creation and/or editing operation by a designer in the virtual space.
- Function in which the user can generate a desired object and freely arrange the object at any position in the virtual space (object creation function)
- Function of combining a plurality of objects of the same type arranged in the virtual space to create one object (object combining function)
- Function of calculating an optimum cable route between two objects in a case where there are a plurality of cable routing paths (cable routes) for connecting two objects (pieces of equipment) in the virtual space (cable route calculation function)
- Function of determining whether or not a predetermined object (equipment) created at a predetermined position in the virtual space satisfies an arrangement condition of the predetermined object (object arrangement determination function)
- Function of, when a predetermined object (equipment) created at a predetermined position in the virtual space is moved in the virtual space, determining an interference state of another object (equipment: interference object) with respect to the movement of the predetermined object (object movement determination function)

Furthermore, the object control unit 212 has the following various operation functions performed by the user on the object in the virtual space.
- Processing function of enabling selection of an object in the virtual space displayed on the user terminal 3 by a selection operation performed by the designer on the object (object selection function)
- Processing function of moving an object displayed on the user terminal 3 in the virtual space by an object movement operation performed by the user (object movement function)
- Processing function of displaying attribute information on the display unit 34 to be described later of the user terminal 3 when the user performs an operation of displaying (referring to) the attribute information associated with the object (attribute information display function)

Note that the object selection function, the object movement function, and the attribute information display function performed by the user can be commonly operated when the various support functions of the object control unit 212 are executed. Furthermore, the attribute information of the object includes, for example, various types of information such as a management number (management symbol), a name, an ID, an installation position (coordinates in the virtual space), an installation area name, a size, a type, a restriction condition on installation (arrangement), a creator, a comment of the creator, creation date and time, and the like of the object, and these pieces of information are combined into one set.

### (Avatar Control Unit)

The avatar control unit 213 creates the attribute information of the user. In addition, an identification (ID) for logging in to the design support device 2 is registered for each user, and the attribute information of each user is associated with the corresponding ID. The avatar control unit 213 then registers (stores) the attribute information associated with the ID of the user in an avatar information storage unit 226 to be described later in the storage unit 22.

The attribute information of the user can include, for example, the following information.
- Job title
- Affiliation and department
- Field of expertise (for example, electrical construction, piping design, and the like)
- Identification information of the avatar of the user (personal identification information such as a name)
- Position information of the avatar of the user in the virtual space
- Past search history of the user

Information such as the job title, affiliation, department, field of expertise, and identification information of the avatar of the user included in the attribute information of the user can be registered by the user when the user first uses the design support device 2. Information such as the position information of the avatar of the user in the virtual space and the past search history of the user is appropriately updated when the design support device 2 is used by the user and set in the attribute information of the user. Note that the position information of the avatar (user) in the virtual space may be, for example, a specific coordinate position of the avatar in the virtual space, information (for example, room information or the like in a building) of the area in which the avatar is present, or a combination (association) of these pieces of information.

The ID of the user or the identification information of the avatar is also associated with the image data of the avatar of the user stored in the tool information storage unit 223 to be described later in the storage unit 22, but the present invention is not limited thereto. For example, the image data of the avatar of the user may also be registered (stored) in the avatar information storage unit 226 to be described later in association with the ID of the user together with the corresponding attribute information. Note that the attribute information of the user is not displayed on the virtual space from the viewpoint of personal information protection and the like.

Furthermore, in order to reflect the operation of the user in the virtual space, the avatar control unit 213 performs image processing for appropriately changing (updating) the image data of the avatar to the image data corresponding to the operation of the user in the virtual space. The avatar control unit 213 then outputs the image data of the avatar after the image processing to the communication unit 23. As a result, the image data of the avatar after the image processing is transmitted to each user terminal 3 via the communication network 4, and is displayed on the display unit 34 (for example, a liquid crystal panel or an HMD) to be described later of each user terminal 3. That is, the image of the avatar reflecting the operation performed on the virtual space by the user is displayed on the display unit 34 to be described later of each user terminal 3.

Note that, in the present embodiment, a configuration example in which the functional unit (object control unit 212) that performs the image processing of the object and the functional unit (avatar control unit 213) that performs the image processing of the avatar are separately provided has been described, but the present invention is not limited thereto. The object control unit 212 and the avatar control unit 213 may be integrally configured.

### (Information Search Unit)

The design support device 2 of the present embodiment has a search function for various types of related information (hereinafter, referred to as "object-related information") of objects (pieces of equipment) arranged in the virtual space. Furthermore, the design support device 2 of the present embodiment has a search function for related information of a surrounding area of a position where the avatar is present in the virtual space and related information of various objects arranged in the surrounding area (hereinafter, these pieces of related information are collectively referred to as "surrounding area-related information").

The object-related information includes, for example, various types of information such as an actual appearance image (a photograph, an appearance drawing, or the like) of an object (equipment), a design drawing, a design specification, an equipment specification, an arrangement specification, legal information related to an arrangement, jurisdiction (under control of our/another company), and various documents such as an equipment estimate and an equipment price list. Furthermore, the surrounding area-related information includes, for example, various types of information such as an actual appearance image (a photograph, an appearance drawing, or the like) of the surrounding area of the avatar, a design drawing of the surrounding area, and object-related information of each object disposed in the surrounding area.

The information search unit 214 performs search and collection processing of object-related information of an object to be searched, and search and collection processing of surrounding area-related information of the surrounding area of the avatar on the basis of various types of information included in the attribute information of the object (equipment) and the attribute information of the user, and the like.

At this time, the number of objects to be searched for these pieces of related information may be singular or plural.

As a method of searching for the object-related information and the surrounding area-related information by the information search unit 214, for example, the existing search method such as a method of searching in an interactive manner by generative artificial intelligence (AI) or a search method by keyword input can be used. In this case, the object-related information and the surrounding area-related information desired by the user can be appropriately searched and collected.

When the user performs the search operation of the object-related information, the information search unit 214 searches for (refers to) various types of information stored in an equipment-related information storage unit 225 to be described later in the storage unit 22 on the basis of the attribute information of the object (equipment) to be searched and the attribute information of the user, and collects (acquires) the object-related information of the object to be searched from the various types of information. The information search unit 214 then outputs the collected object-related information to the communication unit 23. As a result, the collected object-related information is transmitted to the user terminal 3 of the user who has performed the information search via the communication network 4, and the object-related information is displayed in the virtual space displayed on the display unit 34 to be described later of the user terminal 3.

In addition, when the user performs the operation of searching for the surrounding area-related information, the information search unit 214 searches for (refers to) various types of information stored in the site information storage unit 221 and the equipment-related information storage unit 225 to be described later in the storage unit 22 on the basis of the attribute information of the user, and collects (acquires) the surrounding area-related information of the surrounding area to be searched from the various types of information. The information search unit 214 then outputs the collected surrounding area-related information to the communication unit 23. As a result, the collected surrounding area-related information is transmitted to the user terminal 3 of the user who has performed the information search via the communication network 4, and the surrounding area-related information is displayed in the virtual space displayed on the display unit 34 to be described later of the user terminal 3. Specific contents of the operation of searching for the object-related information and the surrounding area-related information by the information search unit 214 will be described in detail later.

In the present embodiment, whether or not to permit access (browsing) is set in each piece of related information stored in the equipment-related information storage unit 225 to be described later or the site information storage unit 221 to be described later in the storage unit 22 depending on the job title, affiliation, department, or the like of the user. Therefore, in the present embodiment, basically, the related information searched by the user is displayed on the display unit 34 to be described later of the user terminal 3 of the user, and is not displayed on the display unit 34 to be described later of the user terminal 3 of another user. However, the present invention is not limited thereto, and for example, the object-related information and the surrounding area-related information that can be browsed by anyone regardless of the position of the user may be displayed on the display unit 34 to be described later of the user terminal 3 of another user from the viewpoint of information sharing in the design operation. Furthermore, for example, even in the case of the related information that can be browsed only by a specific user, a configuration may be provided in which another user can browse the related information from the viewpoint of information sharing in the design operation if the specific user or the like grants permission.

Furthermore, in the present embodiment, although not illustrated, the image of the search tool for the object-related information and the surrounding area-related information operable by the user is displayed on the display screen of the display unit 34 to be described later (for example, a liquid crystal panel or an HMD) of the user terminal 3, separately from the image of the virtual space. At this time, for example, the image of the search tool may be configured to be constantly displayed outside the image of the virtual space, or may be configured to be displayed overlaid on the image of the virtual space by an operation at the time of using the search tool by the user. In addition, the search tool includes an information search function execution button and the like, and image data of the search tool is stored in advance in the tool information storage unit 223 to be described later in the storage unit 22.

Note that in the present embodiment, the configuration example in which the search function for the object-related information and the surrounding area-related information is executed by one information search unit 214 has been described, but the present invention is not limited thereto. The search function unit for the object-related information and the search function unit for the surrounding area-related information may be separately provided.

### [Storage Unit]

The storage unit 22 stores, for example, various types of information necessary for creating the virtual space. The storage unit 22 stores, for example, point cloud data and three-dimensional CAD data of the actual site of the power plant to be designed. Furthermore, the storage unit 22 also stores, for example, the image data of the virtual space, the image data of an object (equipment), the attribute information of the object, the related information of the object, the image data of the avatar of each user, the attribute information of each avatar (user), and the like.

Specifically, as illustrated in FIG. 3, the storage unit 22 functionally includes the site information storage unit 221, a virtual space data storage unit 222, the tool information storage unit 223, the object information storage unit 224, the equipment-related information storage unit 225, and the avatar information storage unit 226.

The site information storage unit 221 stores point cloud data and/or three-dimensional CAD data of the actual site of the power plant to be designed. These pieces of site information are stored in the site information storage unit 221 in advance, and are used when the virtual space creation unit 211 creates image data of a three-dimensional virtual space that simulates the inside and appearance of a facility (site) such as a building of the power plant.

Furthermore, the site information storage unit 221 stores information such as an appearance image (a photograph, an appearance drawing, or the like) and a design drawing of the site. When the information search unit 214 searches for the surrounding area-related information, the actual appearance image (a photograph, an appearance drawing, or the like), the design drawing, and the like of the surrounding area of a position where the avatar (user) is present are collected from the site information storage unit 221. Note that, in the present embodiment, an example in which the site information storage unit 221 is provided in the design support device 2 will be described, but the present invention is not limited thereto, and the site information storage unit 221 may be provided in a database or the like provided outside the design support device 2.

The virtual space data storage unit 222 stores the image data of the three-dimensional virtual space created by the virtual space creation unit 211.

The tool information storage unit 223 stores, for example, image data of objects that are created in the virtual space and simulate pieces of equipment such as a pipe, a conduit, a power panel, a rack, a connection box, and a valve. That is, in the present embodiment, for example, the image data of the objects with basic shapes simulating pieces of equipment such as a pipe, a conduit, a power panel, a rack, a connection box, and a valve is stored in the tool information storage unit 223 in the form of a tool box. In addition, the tool information storage unit 223 stores image data of various operation tools (for example, an object creation tool, an object search tool, and the like) that are displayed overlaid on the virtual space or at positions different from the virtual space and can be operated by the user when the various functions described above are executed. Furthermore, the tool information storage unit 223 also stores the image data of the avatar of each user displayed in the virtual space.

The object information storage unit 224 stores the image data of the object created or changed (updated) by the object control unit 212 and the attribute information of the object associated therewith.

The equipment-related information storage unit 225 stores various types of information related to equipment actually installed in the power plant to be designed. That is, the equipment-related information storage unit 225 stores, for example, various types of object-related information such as an actual appearance image (a photograph, an appearance drawing, or the like), a design drawing, a design specification, an equipment specification, an arrangement specification, legal information related to an arrangement of an object (equipment), and various documents such as an equipment estimate and an equipment price list. Then, in the operation of searching for related information by the information search unit 214, the object-related information is extracted from the various types of information stored in the equipment-related information storage unit 225. Note that, in the present embodiment, an example in which the equipment-related information storage unit 225 is provided in the design support device 2 will be described, but the present invention is not limited thereto, and the equipment-related information storage unit 225 may be provided in a database or the like provided outside the design support device 2.

The avatar information storage unit 226 stores the attribute information of the user associated with the ID of each user. Note that the image data of the corresponding avatar stored in the tool information storage unit 223 is also associated with the ID of each user. Furthermore, the avatar information storage unit 226 also stores image data of an avatar on which image processing has been performed by the avatar control unit 213.

### [Communication Unit]

The communication unit 23 transmits the image data of the virtual space and the object, the information of the object (attribute information and the like), the image data of the avatar of each user, and the like created by the control unit 21 to the plurality of user terminals 3 connectable via the communication network 4. In addition, the communication unit 23 receives information of various operations performed on the virtual space by each user, which is transmitted from each of the plurality of user terminals 3, and outputs the received various types of operation information to the control unit 21.

### <Configuration of User Terminal>

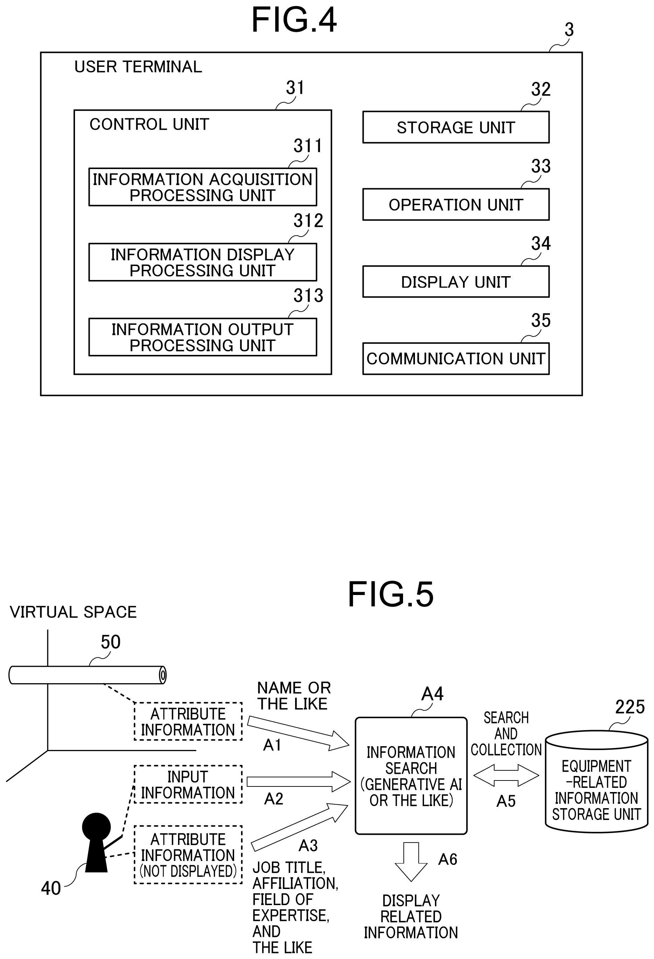

FIG. 4 is a functional block configuration diagram of the user terminal 3. As illustrated in FIG. 4, the user terminal 3 includes a control unit 31, a storage unit 32, an operation unit 33, the display unit 34, and a communication unit 35. Note that, for convenience of description, FIG. 4 illustrates only processing functional units related to design support performed by the user terminal 3.

The control unit 31 is included in the CPU 11 in FIG. 2, reads a program code for implementing various functions executable by the user terminal 3 from the ROM 12 to the RAM 13 in FIG. 2, and executes the program code. The storage unit 32 is included in the nonvolatile storage 17 and/or the RAM 13 in FIG. 2, and includes a data readable and writable memory. The operation unit 33 is included in the operation device 15 in FIG. 2. The display unit 34 is included in the display device 16 in FIG. 2, and includes, for example, a liquid crystal panel, an HMD, or the like. Furthermore, the communication unit 35 is included in the network I/F 14 in FIG. 2, and transmits and receives various types of information (data) to and from the design support device 2 connectable via the communication network 4. Hereinafter, the outline of the configuration and operation of each unit included in the user terminal 3 will be described.

### [Control Unit]

As illustrated in FIG. 4, the control unit 31 functionally includes an information acquisition processing unit 311, an information display processing unit 312, and an information output processing unit 313.

The information acquisition processing unit 311 acquires various types of image data and various types of information created by the design support device 2, that is, various types of design support information, received by the communication unit 35. Note that the various types of image data acquired by the information acquisition processing unit 311 include, for example, various types of image data related to design support such as the image data of the virtual space, the image data of various objects (pieces of equipment), and the image data of the avatar of the user. Furthermore, the various types of information acquired by the information acquisition processing unit 311 include, for example, the attribute information and related information of the object, the surrounding area-related information of the avatar of the user, and the like.

The information acquisition processing unit 311 then outputs various types of design support information (various types of image data, various types of information, and the like related to design support) related to the virtual space, the object, and the avatar acquired from the design support device 2 to the information display processing unit 312. In addition, the information acquisition processing unit 311 stores the acquired various types of design support information in the storage unit 32.

The information display processing unit 312 outputs various types of design support information (various types of image data, various types of information, and the like related to design support) related to the virtual space, the object, and the avatar acquired by the information acquisition processing unit 311 to the display unit 34, and executes control to display these pieces of information on the display unit 34.

Furthermore, the information output processing unit 313 acquires operation signals of, for example, an object creation operation, various editing operations (change operation, combining operation, movement operation, and the like), various determination operations (arrangement determination operation, movement determination operation, and the like), an object selection operation, an information search operation, and the like performed on the virtual space by the user via the operation unit 33, and outputs operation information corresponding to the operation signals to the communication unit 35. As a result, information (operation content information) of various types of operations performed on the virtual space by the user is transmitted to the design support device 2 via the communication network 4.

### [Storage Unit]

The storage unit 32 stores various types of design support information (various types of image data, various types of information, and the like related to design support) related to the virtual space, the object, and the avatar acquired by the information acquisition processing unit 311 and displayed on the display unit 34. Furthermore, in the present embodiment, information of an operation performed on the virtual space by the user via the operation unit 33 may be stored in the storage unit 32. That is, the operation history information of the user in the design support work of the power plant may be stored in the storage unit 32.

### [Operation Unit]

The operation unit 33 includes, for example, a key, a button, a mouse, a touch panel, and the like provided in the user terminal 3. In addition, in a case where the user performs the design support work using an HMD, the operation unit 33 includes a controller that is used by being held in the hand or worn by the user. In a case where the user performs a predetermined operation on the virtual space using the operation unit 33 such as a key, a button, a mouse, a touch panel, or a controller, for example, the operation unit 33 then acquires an operation signal corresponding to the predetermined operation and outputs the operation signal to the control unit 31 (information output processing unit 313).

### [Display Unit]

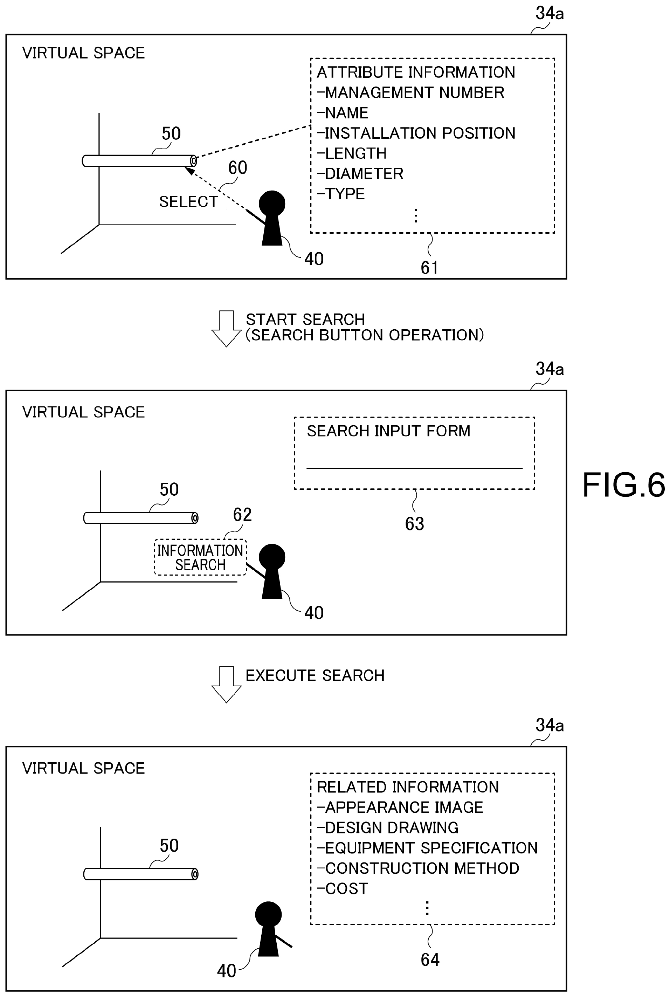

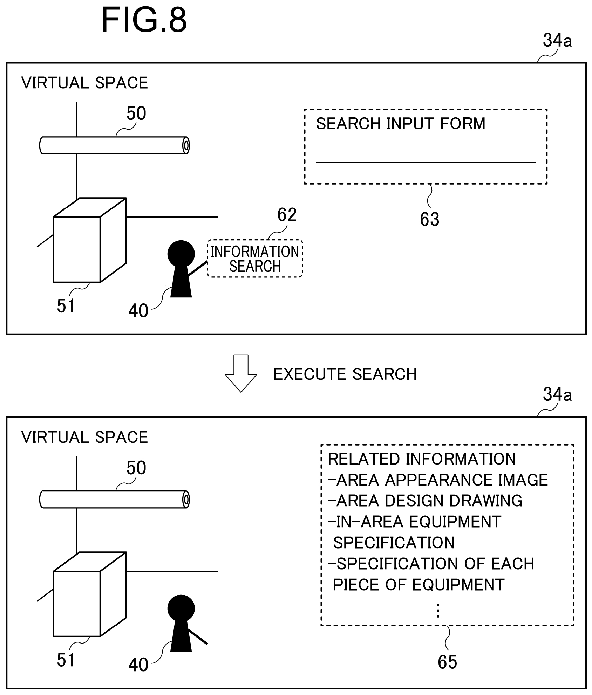

The display unit 34 displays various types of image data related to design support of the virtual space, various objects, and various avatars input from the control unit 31 (information display processing unit 312) on a display screen 34a provided in the display unit 34 (see FIGS. 6 and 8 to be described later). In addition, the display unit 34 can also display the attribute information and related information of various objects (pieces of equipment), the surrounding area-related information, and the like in response to a request (operation) of the user.

### [Communication Unit]

The communication unit 35 receives, for example, various types of design support information (various types of image data, various types of information, and the like related to design support) related to the virtual space, various objects, and various avatars created by the design support device 2 via the communication network 4. In addition, the communication unit 35 transmits, for example, information of an operation performed on the operation unit 33 by the user, which is input from the control unit 31 (information output processing unit 313), to the design support device 2 via the communication network 4.

### <Search Function for Various Types of Related Information by Information Search Unit>

As described above, the information search unit 214 (see FIG. 3) of the design support device 2 of the present embodiment can search for the object-related information and the surrounding area-related information of the user (avatar) using, for example, a search system including generative AI or the like on the basis of the attribute information of the object and/or the attribute information of the user (avatar). Hereinafter, a specific search operation of the object-related information and the surrounding area-related information executed (controlled) by the information search unit 214 will be described.

### [Object-Related Information Search Operation]

First, an object-related information search operation executed (controlled) by the information search unit 214 will be described with reference to FIG. 5. FIG. 5 is a diagram illustrating a flow of an operation in a case where an information search is performed by operating an object-related information search function for a predetermined object (equipment) disposed at a predetermined position in the virtual space. Note that, in the example illustrated in FIG. 5, an example in which the object as an information search target is a long object 50 such as a pipe or a conduit will be described.

In the example illustrated in FIG. 5, at the time of searching for the object-related information, although not illustrated, first, after the user (avatar 40) accesses the virtual space, the user operates the operation unit 33 in the virtual space displayed on the display screen 34a of the user terminal 3 of the user, and selects the long object 50 as the information search target. Next, the user (avatar 40) extracts, for example, search information such as a name from attribute information 61 of the long object 50 (operation indicated by arrow A1 in FIG. 5).

Next, the user inputs input information such as extracted information (a search key) and instruction information (a prompt or the like) for information desired by the user to a search system including, for example, generative AI or the like in a search information input form 63 (see FIG. 6 to be described later) displayed on the display screen 34a (operation indicated by arrow A2 in FIG. 5), activates the search system, and starts the information search (operation A4 in FIG. 5). However, at this time, in the present embodiment, the information search unit 214 also automatically extracts, for example, information such as a job title, an affiliation, a department, a field of expertise, and a past search history included in the attribute information of the user, which is non-display information, as one search key, and inputs the information to the search system including, for example, generative AI or the like (operation of an arrow A3 in FIG. 5) to perform the information search. At this time, the attribute information of the user used as the search key at the time of searching for the object-related information can be appropriately set by the user, and may be, for example, all the information included in the attribute information or some pieces of information. Alternatively, the attribute information of the user need not be used.

For example, in the information search by the search system including generative AI or the like, as illustrated in FIG. 5, a search is performed on the equipment-related information storage unit 225 (operation indicated by arrow A5 in FIG. 5), and the object-related information of the long object 50 is collected from the information stored in the equipment-related information storage unit 225. Note that, at this time, in the present embodiment, for example, information such as a job title, an affiliation, a department, a field of expertise, and a past search history included in the attribute information of the user is also used as one of the search keys to perform the information search, and thus, the object-related information of the long object 50 based on the position of the user or the like is collected.

The information search unit 214 then transmits the search result (collected object-related information) of the search system including, for example, generative AI or the like to the user terminal 3 that has performed the information search (operation indicated by arrow A6 in FIG. 5). As a result, the search result (collected object-related information) of the search system is displayed on the display screen 34a of the user terminal 3 that has performed the information search.

Here, a specific operation of the avatar 40 and a change mode of the display information at the time of the object-related information search operation will be described with reference to FIG. 6. FIG. 6 is a diagram illustrating an example of an operation image displayed on the display screen 34a (display unit 34) of the user terminal 3 of the user who has executed the search at the time of the object-related information search operation described above.

At the time of searching for the object-related information, first, after the user accesses the virtual space, the user operates the operation unit 33 in the virtual space displayed on the display screen 34a of the user terminal 3 of the user, and selects the long object 50 as the information search target. With this operation, as illustrated in the upper diagram of FIG. 6, in the virtual space (on the display screen 34a), the image in which the avatar 40 of the user selects the long object 50 using a selection tool 60 is displayed, and the attribute information 61 of the selected long object 50 is also displayed. The user extracts search information such as the name of the long object 50 on the basis of the attribute information 61 of the displayed long object 50.

Next, the user displays an information search execution button 62 in the virtual space (on the display screen 34a) using the operation unit 33 of the user terminal 3 of the user. The user then performs a predetermined operation on the information search execution button 62 using the operation unit 33 of the user terminal 3 of the user. With this operation, as illustrated in the middle diagram of FIG. 6, in the virtual space (display screen 34a), an image in which the avatar 40 of the user presses the information search execution button 62 is displayed. Furthermore, with this operation, the input form 63 for interactively inputting the search information is displayed in the virtual space (on the display screen 34a). Note that, at this time, in the virtual space (on the display screen 34a), the image of the attribute information 61 of the long object 50 is deleted.

Next, the user inputs information (a search key such as a name) extracted from the attribute information of the long object 50, instruction information (a prompt or the like) for information desired by the user, and the like to the input form 63, and operates the search system including, for example, generative AI or the like to perform the information search.

As a result, the object-related information 64 of the long object 50 is collected, and the collected object-related information 64 is displayed in the virtual space (on the display screen 34a) as illustrated in the lower diagram of FIG. 6. At this time, in the present embodiment, for example, since the information search is performed by using information such as a job title, an affiliation, a department, a field of expertise, and a past search history included in the attribute information of the user as one of the search keys, the object-related information 64 of the long object 50 based on the position of the user or the like is displayed in the virtual space (on the display screen 34a). Furthermore, at this time, the image of the input form 63 is deleted in the virtual space (on the display screen 34a).

In the example illustrated in FIG. 6, each piece of information included in the object-related information 64 of the long object 50 displayed in the virtual space (on the display screen 34a) is displayed in a list form. Then, when the user operates the operation unit 33 and selects predetermined information in the object-related information 64 in the virtual space (on the display screen 34a), the related information corresponding to the selected predetermined information is displayed. For example, in a case where the user selects "appearance image" in the object-related information 64 in the virtual space (on the display screen 34a), the appearance image of the long object 50 is displayed on the display screen 34a, and in a case where the user selects "cost", materials (for example, an estimate, a price list, and the like) related to the cost of the long object 50 are displayed on the display screen 34a. However, the display mode of the related information is not limited to this example, and the related information itself may be directly displayed in the virtual space (on the display screen 34a) instead of the list (item) of the related information.

Furthermore, the object-related information search operation is not limited to the above example. For example, when the information search execution button 62 of the object-related information is operated after the image indicating the start of the object-related information search is displayed in the virtual space, it may be configured that the information search unit 214 automatically extracts the attribute information of the object selected in the virtual space and the information (job title or the like) related to the position of the user included in the attribute information (not displayed) of the avatar without displaying the input form 63, and automatically executes the object-related information search.

As described above, in the object-related information search method of the present embodiment, since the search system including, for example, generative AI or the like is used, the search can be performed in an interactive manner with the user, and the object-related information desired by the user can be appropriately searched and collected.

Furthermore, in the present embodiment, the information search unit 214 can perform the information search by automatically extracting, as one of search keys, information included in the attribute information of the user, such as, for example, a job title, an affiliation, a department, a field of expertise, and a past search history. Therefore, in this case, the object-related information based on the position of the user (job title, affiliation, field of expertise, and the like) can be acquired (collected).

For example, when the user is a user at a designer level, basic design-related information (design documents) is acquired as the object-related information. Furthermore, for example, when the user is a user belonging to a construction department, construction-related information is acquired as the object-related information, and when the user is a user belonging to a budget related department, budget-related information is acquired as the object-related information. Moreover, for example, when the user is in charge of electrical construction, the information related to electrical construction is acquired as the object-related information. When the user is in charge of electrical system design, the information related to electrical system design is acquired as the object-related information. When the user is in charge of piping construction, the information related to piping construction is acquired as the object-related information.

Furthermore, in a case where the object-related information search function is provided, for example, when another user who is not directly involved in design with respect to a predetermined object (equipment) desires to examine information of the object in the virtual space (on the display screen 34a), the information can be quickly extracted. In this case, even in a situation in which only the system designer on the upstream design side can grasp the content of the entire design, it is possible to quickly access necessary information from an enormous amount of information of the entire design in a department on the downstream design side such as construction design that does not grasp the content of the entire design. Conversely, for example, the system designer on the upstream design side can know the specification of the foundation of a plant building or the like, the specification of a penetrating portion in the building, the building structure, the information of an interference object, and the like set in the downstream design, and the feedback of the information to the system design is easily performed.

### [Surrounding Area-Related Information Search Operation]

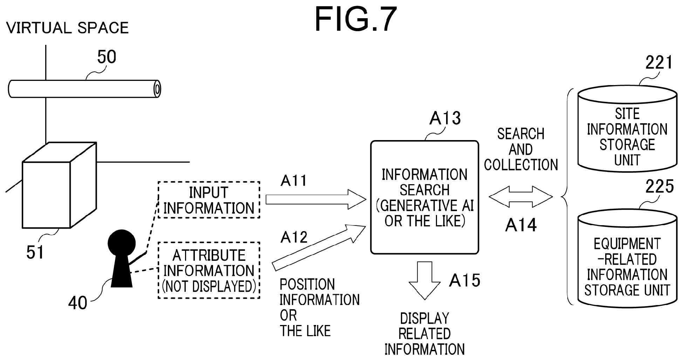

Next, a surrounding area-related information search operation executed (controlled) by the information search unit 214 will be described with reference to FIG. 7. FIG. 7 is a diagram illustrating a flow of an operation in a case where the information search is performed by operating the search function for the surrounding area-related information (design drawing of surrounding area, appearance information, and object-related information of equipment installed in surrounding area) of the avatar 40 (user) present at a predetermined position in the virtual space. Note that, in the example illustrated in FIG. 7, an example in which the long object 50 such as a pipe or a conduit, and an object 51 of equipment such as a panel or a device are arranged in the surrounding area of the avatar 40 will be described.

In the example illustrated in FIG. 7, at the time of searching for the surrounding area-related information, although not illustrated, first, after the user accesses the virtual space, the user operates the operation unit 33 in the virtual space displayed on the display screen 34a of the user terminal 3 of the user, and displays the search information input form 63.

Next, the user inputs input information such as instruction information (a prompt or the like) for information desired by the user to a search system including, for example, generative AI or the like (operation indicated by arrow A11 in FIG. 7) in the search information input form 63 (see FIG. 8 to be described later) displayed on the display screen 34a, activates the search system, and starts the information search (operation A13 in FIG. 7). However, in the present embodiment, the information search unit 214 also automatically extracts, for example, information such as position information, a job title, an affiliation, a department, a field of expertise, and a past search history included in the attribute information of the user that is non-display information as the search key, inputs the information to the search system including, for example, generative AI or the like (operation indicated by arrow A12 in FIG. 7), and performs the information search. At this time, as the attribute information of the user used as the search key when searching for the surrounding area-related information, the position information of the avatar 40 (user) is essential, but whether or not to use other attribute information as the search key can be appropriately set by the user. For example, all the information included in the attribute information of the user may be used as the search key, the position information and some other information may be used as the search key, or only the position information may be used as the search key.

Then, when the search by the search system including, for example, generative AI or the like is started, the surrounding area-related information (design drawing of surrounding area, appearance information, and object-related information of equipment installed in surrounding area) of the position in the virtual space in which the user (avatar 40) is present is searched and collected on the basis of the position information included in the attribute information of the user. Note that the range of the surrounding area to be searched may be freely set in advance by the user or the like, or may be configured to be appropriately set by the user for each search for the surrounding area-related information.

For example, in the information search by the search system including generative AI or the like, as illustrated in FIG. 7, the search is performed in the site information storage unit 221 and the equipment-related information storage unit 225 (operation indicated by arrow A14 in FIG. 7), and the surrounding area-related information of the position where the user (avatar 40) is present is collected from the information stored in the site information storage unit 221 and the equipment-related information storage unit 225. At this time, in addition to the position information included in the attribute information of the user, for example, when the information search is performed using information such as a job title, an affiliation, a department, a field of expertise, and a past retrieval history as one of the search keys, the object-related information of the long object 50 and the object 51 based on the position of the user or the like is collected.

The information search unit 214 then transmits the search result (collected surrounding area-related information) of the search system including, for example, generative AI or the like to the user terminal 3 that has performed the information search (operation indicated by arrow A15 in FIG. 5). As a result, the search result (collected surrounding area-related information) of the search system is displayed on the display screen 34a of the user terminal 3 that has performed the information search.

Here, a specific operation of the avatar 40 and a change mode of the display information at the time of the surrounding area-related information search operation described above will be described with reference to FIG. 8. FIG. 8 is a diagram illustrating an example of an operation image displayed on the display screen 34a (display unit 34) of the user terminal 3 of the user who has executed the search at the time of the surrounding area-related information search operation described above.

At the time of searching for the surrounding area-related information, first, after the user accesses the virtual space, the user operates the operation unit 33 in the virtual space displayed on the display screen 34a of the user terminal 3 of the user, and displays the information search execution button 62 in the virtual space (on the display screen 34a). The user then performs a predetermined operation on the information search execution button 62 using the operation unit 33 of the user terminal 3 of the user. With this operation, as illustrated in the upper diagram of FIG. 8, in the virtual space (on the display screen 34a), the image in which the avatar 40 of the user presses the information search execution button 62 is displayed. Furthermore, with this operation, the input form 63 for interactively inputting the search information is displayed in the virtual space (on the display screen 34a).

Next, the user inputs instruction information (a prompt or the like) or the like for information desired by the user to the input form 63, operates a search system including, for example, generative AI or the like, and performs the information search. As a result, for example, the surrounding area-related information 65 including the design drawing of the surrounding area of the avatar 40, the appearance information, and the object-related information of each piece of equipment (such as the long object 50 and the object 51) installed in the surrounding area is collected, and the collected surrounding area-related information 65 is displayed in the virtual space (on the display screen 34a) as illustrated in the lower diagram of FIG. 8. At this time, in the present embodiment, in a case where the information search is performed using, for example, information such as a job title, an affiliation, a department, a field of expertise, and a past search history included in the attribute information of the user as one of the search keys, related information of each piece of equipment (such as the long object 50 and the object 51) based on the position of the user or the like is displayed in the virtual space (on the display screen 34a). Furthermore, at this time, the image of the input form 63 is deleted in the virtual space (on the display screen 34a).

In the example illustrated in FIG. 8, in the surrounding area-related information 65 displayed in the virtual space (on the display screen 34a), each piece of information included therein is displayed in a list form. Then, the user operates the operation unit 33 and selects predetermined information in the surrounding area-related information 65 in the virtual space (on the display screen 34a), so that the related information corresponding to the selected predetermined information is displayed. For example, in a case where the user selects "area design drawing" in the surrounding area-related information 65 in the virtual space (on the display screen 34a), the design drawing of the surrounding area of the avatar 40 (user) is displayed on the display screen 34a. However, the display mode of the related information is not limited to this example, and the related information itself may be directly displayed in the virtual space (on the display screen 34a) instead of the list (item) of the related information.

Note that the surrounding area-related information search operation is not limited to the above example. For example, when the information search execution button 62 is operated after the image indicating the start of the search for the related information is displayed in the virtual space, it may be configured that the information search unit 214 automatically extracts information such as position information included in the attribute information (not displayed) of the avatar 40 of the user and automatically executes the search for the surrounding area-related information without displaying the input form 63.

In addition, in the example of the surrounding area-related information search operation illustrated in FIGS. 7 and 8, an example in which the object to be searched is not selected has been described, but the present invention is not limited thereto. For example, similarly to the example of the object-related information search operation described with reference to FIGS. 5 and 6, the user may first select an object to be searched (in the examples illustrated in FIGS. 7 and 8, for example, at least one of the long object 50 and the object 51), and then perform the surrounding area-related information search operation. In this case, as the surrounding area-related information, the object-related information of the selected object (for example, at least one of the long object 50 and the object 51) is collected in addition to the information of the surrounding area such as the design drawing and the appearance information of the surrounding area of the avatar 40.

Furthermore, in the example of the surrounding area-related information search operation illustrated in FIGS. 7 and 8, for example, an example of collecting the surrounding area-related information 65 including the design drawing and the appearance information of the surrounding area of the avatar 40, and the object-related information of each piece of equipment (such as the long object 50 or the object 51) installed in the surrounding area has been described, but the present invention is not limited thereto. For example, it may be configured that, as the surrounding area-related information 65, only the information such as the design drawing and the appearance information of the surrounding area of the avatar 40 is collected. Such a search operation can be implemented, for example, by the user inputting information indicating that only information of the surrounding area is acquired in the input form 63 of the search information displayed on the display screen 34a.

As described above, in the surrounding area-related information search function, similarly to the object-related information search function, the information search is performed using the search system including, for example, generative AI or the like, and the attribute information of the user is included in the input information (search key) at the time of the search. Therefore, also in the surrounding area-related information search function, an effect similar to the effect obtained by the object-related information search function can be obtained.

### <Various Effects>

As described above, in the object-related information search function provided in the design support system 1 and the design support device 2 of the present embodiment, for example, the search system including generative AI or the like is used, and information (information related to the position of the user) such as a job title, an affiliation, a department, and a field of expertise included in the attribute information of the user (avatar) can be used as the input information (search key) of the search system. Therefore, the search can be performed in an interactive manner with the user, and the object-related information based on the position (job title, affiliation, field of expertise, or the like) of the user can be acquired (collected).

In addition, in the surrounding area-related information search function included in the design support system 1 and the design support device 2 of the present embodiment, by using the position information included in the attribute information of the user (avatar) as the input information (search key) of the search system including, for example, generative AI or the like, not only the information of the surrounding area of the user (avatar) but also the object-related information of the equipment in the surrounding area can be collectively acquired (collected).

Therefore, in the design support system 1 and the design support device 2 of the present embodiment, in plant design work, a person involved can easily search for information related to plant design, and can collect information appropriate (desired) for the person involved.

### <Various Modifications>

Although the design support system 1 and the design support device 2 according to an embodiment of the present invention have been described above, the present invention is not limited thereto, and various other modifications can be made without departing from the gist of the present invention described in the claims. For example, the following various modifications can be adopted, and effects similar to those of the embodiment described above can be obtained in the following various modifications.

In the above embodiment, in order to describe the operation contents of the various functions of the design support system 1 and the design support device 2 in an easily understandable manner, an example has been described in which an image of the virtual space as viewed from the viewpoint position of the third person who can see the objects of various pieces of equipment arranged in the virtual space and the avatar 40 is displayed on the display screen 34a of the user terminal 3, but the present invention is not limited thereto. For example, an image (video) of the virtual space as viewed from the viewpoint position of the avatar 40 of the user may be displayed on the display screen 34a of the user terminal 3. In this case, the user can perform various operations related to design with a more realistic feeling in the virtual space (on the display screen 34a).

The design support device 2 of the above embodiment may have a function of enabling a plurality of users accessing the virtual space to communicate with each other by voice, chat, or the like. In this case, among a plurality of users, the user can easily understand the idea, intention, and the like of other users, and a more reasonable design can be achieved. Furthermore, at the time of searching for the object-related information and the surrounding area-related information described above, it may be configured such that the information search is performed in an interactive manner by voice with the search system including, for example, generative AI or the like.

In the above embodiment, an example in which the control unit 21 included in the design support device 2 includes a single device has been described, but the present invention is not limited thereto. For example, the control unit 21 may include a plurality of devices communicably connected to each other.

In the above embodiment, an example in which the operation of various functions of the design support device 2 is executed on software has been described, but the present invention is not limited thereto. For example, some or all of the various functions of the design support device 2 may be implemented by hardware such as a circuit.

In the above embodiment, the design support system 1 and the design support device 2 that can be used in the design work of the power plant have been described, but the present invention is not limited thereto. The technique of the present invention described above can be applied to design work in any technical field as long as it is a technical field in which a plurality of pieces of design work are carried out in a waterfall manner.

Further embodiments may be formed by combining the features of the independent claim with the features of one or more of any of the dependent claims, in addition to the combinations as shown by the original set of claims.

In addition, the above embodiment is for describing the configuration of the device in detail and specifically in order to describe the present invention in an easily understandable manner, and is not necessarily limited to one including all the configurations described. Positions, sizes, shapes, ranges, and the like of the components illustrated in the drawings and the like may not represent actual positions, sizes, shapes, ranges, and the like in order to facilitate understanding of the invention. Therefore, the present invention is not necessarily limited to the positions, sizes, shapes, ranges, and the like disclosed in the drawings and the like. In addition, it is possible to add, delete, and replace other configurations for a part of the configuration of the above embodiment. Furthermore, the control lines and information lines that are considered to be necessary for the description are illustrated, and all the control lines and the information lines in the product are not necessarily illustrated. In practice, it may be considered that almost all the configurations are connected to each other.

### Reference Signs List

- 1: design support system
- 2: design support device
- 3: user terminal
- 4: communication network
- 21, 31: control unit
- 22, 32: storage unit
- 23, 35: communication unit
- 33: operation unit
- 34: display unit
- 34a: display screen
- 40: avatar
- 50: long object
- 51: object
- 62: information search execution button
- 63: input form
- 64: object-related information
- 65: surrounding area-related information
- 211: virtual space creation unit
- 212: object control unit
- 213: avatar control unit
- 214: information search unit
- 221: site information storage unit
- 222: virtual space data storage unit
- 223: tool information storage unit
- 224: object information storage unit
- 225: equipment-related information storage unit
- 226: avatar information storage unit

## Claims

1. A design support device (2) comprising:
a virtual space creation unit (211) configured to create image data of a virtual space simulating a site to be designed;
an information search unit (214) configured to be able to search for information related to equipment to be designed, which is disposed in the virtual space, on a basis of attribute information of a user; and
a communication unit (23) communicably connected to an external device (3) used by the user, configured to receive an instruction to search for information related to equipment by the user, and configured to transmit a result of an information search by the information search unit (214) performed on a basis of the instruction to the external device (3).

2. The design support device (2) according to claim 1,wherein
attribute information of the user includes information related to a position of the user, and
the information search unit (214) performs an information search using information related to a position of the user as one of search keys.

3. The design support device (2) according to claim 2, wherein
information related to a position of the user includes information related to a job title of the user.

4. The design support device (2) according to claim 2, wherein information related to a position of the user includes information related to an affiliation of the user.

5. The design support device (2) according to claim 2, wherein
information related to a position of the user includes information related to a field of expertise of the user.

6. The design support device (2) according to claim 2, wherein
the information search unit (214) searches for information related to the equipment using generative artificial intelligence.

7. The design support device (2) according to claim 1, wherein
attribute information of the user includes position information of an avatar (40) corresponding to the user in the virtual space, and
the information search unit (214) performs an information search using position information of the avatar (40) as one of search keys.

8. The design support device (2) according to claim 7, wherein
the information search unit (214) acquires, as a search result, information of a surrounding area of a position of the avatar (40) and
information related to the equipment disposed in the surrounding area.

9. The design support device (2) according to claim 1, wherein
the attribute information of the user includes past search history information of the user, and
the information search unit (214) performs an information search using past search history information of the user as one of search keys.

10. A design support system (1) comprising:
an information processing device (3) used by a user;
a virtual space creation unit (211) configured to create image data of a virtual space simulating a site to be designed;
an information search unit (214) configured to be able to search for information related to equipment to be designed, which is disposed in the virtual space, on a basis of attribute information of the user; and
a communication unit (23) communicably connected to the information processing device (3), configured to receive an operation signal corresponding to an operation of searching for information related to the equipment performed on the information processing device by the user, and transmit a result of an information search performed by the information search unit (214) on a basis of the operation signal to the information processing device (3).
